# EUROPÄISCHE PATENTANMELDUNG

(11) **EP 0 969 242 A2**
(43) Veröffentlichungstag der Anmeldung: **05.01.2000**
(21) Anmeldenummer: 99112658.2
(22) Anmeldetag: 02.07.1999
(51) Int. Cl.: F17C 1/00, F17C 13/04

(54) **Toroidförmiger Tank für Flüssiggas**

(30) Priorität: 03.07.1998 PL 32726298
(71) Anmelder: Staniuk, Michael, 76-200 Slupsk (PL)
(72) Erfinder: Staniuk, Michael, 76-200 Slupsk (PL)
(74) Vertreter: Meyer, Ludgerus A., Dipl.-Ing.

(57) **Zusammenfassung**

Die Erfindung betrifft einen Tank für Flüssiggas mit einem Kopfstück für eine Mehrventilgruppe. Erfindungsgemäß weist der Tank eine seitliche Verkleidung (5) mit Deckel (6) auf, die den Mehrventilkopf abdecken, wobei sich in der den Kopf (4) seitlich umgebenden seitlichen Verkleidung zwei Öffnungen für Rohrleitungen (7, 8) zur Aufnahme und zum Füllen befinden und der Mehrventilkopf in den oberen Teil des Tanks eingeschweißt ist.

## Beschreibung

Die vorliegende Erfindung betrifft einen toroidförmigen Tank für Flüssiggas.

Aus der EP 0 473 555 ist ein toroidförmiger Tank bekannt, in dem an den sich zur Tankmitte richtenden Seiten mindestens zwei Kopfstücke für Ventilgruppen vorgesehen sind.

Zwei Rohrleitungen, eine Aufnahme- und eine Fülleitung, laufen durch den Hohlraum der Tankmitte hindurch, der durch einen oberen und unteren Deckel geschlossen ist. Beide Deckel sind mit dem Tank mit Verdreh-Elementen zusammen verdreht, wodurch sie eng an die Außenfläche des Tanks angedrückt sind.

Ein Nachteil und eine Unbequemlichkeit der bekannten Lösung ist, daß der Hohlraum in der Tankmitte geschlossen ist und nicht für andere Zwecke verwendet werden kann, wie z.B. zum Tank-Befestigen. Darüber hinaus ist diese Lösung aufwendig in der Herstellung und Montage und erfordert viele zusätzliche Elemente.

Um die obige Lösung zu vereinfachen, weist der erfindungsgemäße Tank mit dem Kopfstück für die Mehrventilgruppe eine seitliche Verkleidung mit Deckel auf, die den Mehrventilkopf umgeben, wobei sich in der den Kopf umgebenden seitlichen Verkleidung zwei Öffnungen der Rohrleitungen zur Aufnahme und zum Füllen befinden, und der Mehrventilkopf in den oberen Teil des Tanks eingeschweißt ist.

Der Tank besteht aus einem oberen und einem unteren Boden sowie einem Mittelteil in Form eines profilierten Rohres, das beide Böden von innen verbindet.

Die Erfindung wird in den beigefügten Zeichnungen näher erläutert. Es zeigen:

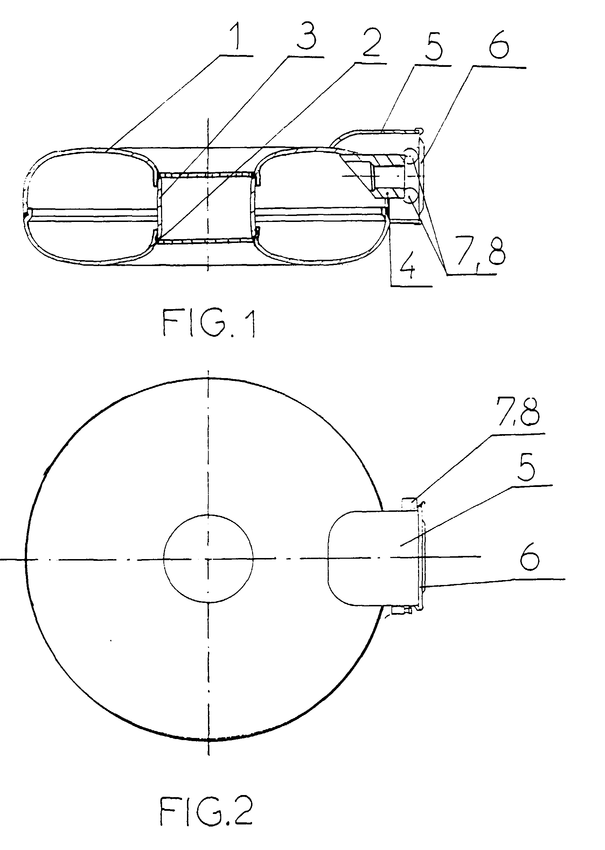

- Fig. 1: einen toroidförmigen Tank im Quer-Halbschnitt und
- Fig. 2: einen toriodförmigen Tank von oben.

Ein toroidförmiger Tank für Flüssiggas nach der Erfindung ist durch eine außenliegende Schweißverbindung des oberen Bodens 1 und des unteren Boden 2 und eine innere Schweißverbindung mit dem profilierten Rohr 3 gebildet, das beide Böden 1 und 2 verbindet. Im oberen Boden 1 ist der Mehrventilkopf 4 eingeschweißt, den die seitlich angeschweißte Verkleidung 5 mit dem Deckel 6 umgibt.

Die seitliche Verkleidung 5 weist zwei Öffnungen für Rohrleitungen 7 und 8 zur Aufnahme bzw. Abgabe und zum Füllen auf.

### Bezugszeichen

- 1: oberer Boden
- 2: unterer Boden
- 3: profiliertes Rohr
- 4: Mehrventilkopf
- 5: seitliche Verkleidung
- 6: Deckel
- 7: Rohrleitung
- 8: Rohrleitung

## Patentansprüche

1. Toroidförmiger Tank für Flüssiggas mit einem Kopfstück für eine Mehrventilgruppe, dadurch gekennzeichnet, daß er eine seitliche Verkleidung (5) mit Deckel (6) aufweist, die den Mehrventilkopf abdecken, wobei sich in der den Kopf (4) seitlich umgebenden seitlichen Verkleidung zwei Öffnungen für Rohrleitungen (7, 8) zur Aufnahme und zum Füllen befinden und der Mehrventilkopf in den oberen Teil des Tanks eingeschweißt ist.

2. Toroidförmiger Tank nach Anspruch 1, dadurch gekennzeichnet, daß der Tank aus einem oberen Boden (1), einem unteren Boden (2) und einem Mittelteil in Form eines profilierten Rohrs (3) besteht, wobei der Mittelteil beide Böden (1, 2) verbindet, die von außen unmittelbar miteinander verbunden sind.
